# EUROPÄISCHE PATENTANMELDUNG

(11) **EP 2 071 707 A1**
(43) Veröffentlichungstag der Anmeldung: **17.06.2009**
(21) Anmeldenummer: 07024228.4
(22) Anmeldetag: 13.12.2007
(51) Int. Cl.: H02K 3/487, H02K 3/493

(54) **Dynamoelektrische Maschine mit Zahnspulen**

(71) Anmelder: SIEMENS AKTIENGESELLSCHAFT, 80333 München (DE)
(72) Erfinder: Bott, Erich, 97618 Hollstadt (DE); Vollmer, Rolf, 36129 Gersfeld (DE)

(57) **Zusammenfassung**

Die Erfindung betriff eine dynamoelektrische Maschine mit einem Stator (1) mit zu einem Rotor ausgerichteten Zähnen, wobei zumindest eine vorgebbare Anzahl von Zähnen von einem in Nuten (6) angeordneten Wicklungssystem umgeben ist, wobei die durch die Zähne gebildeten Nuten (6) offen ausgeführt sind und durch einen Nutverschlusselement jeweils geschlossen sind, das ein elektrisch und magnetisch nichtleitfähiges Material aufweist, in dem im Bereich der zum Luftspalt (8) gewandten Zahnabschnitte der Zahnköpfe (4) Zahnkopfverbreiterungselemente (9) vorgesehen sind.

## Beschreibung

Die Erfindung betrifft eine dynamoelektrische Maschine mit einem Stator mit durch im Wesentlichen radial zu einem Rotor ausgerichteten Zähnen, wobei zumindest eine vorgebbare Anzahl von Zähnen von einem Wicklungssystem umgeben ist, wobei durch die Zähne gebildeten Nuten offen ausgeführt sind.

Normalerweise weisen Zähne von Statoren dynamoelektrischer Maschinen Zahnköpfe auf, Diese sind im Vergleich zu einem Zahnschaft insbesondere verbreitert ausgeführt. Sie dienen der Vergleichmäßigung des Magnetflusses im Luftspalt der dynamoelektrischen Maschine, was sich auf die Kenndaten und Funktion der dynamoelektrischen Maschinen vorteilhaft auswirkt. Vor allem die verbreiterten Zahnköpfe erschweren jedoch das Einbringen der Wicklung durch die bekannten Verfahren wie Einziehtechnik oder durch Nadelwickler in die zwischen den Zähnen befindlichen Nuten des Stators, was letztlich eine mit hohem Aufwand vergleichsweise geringe Kupferfüllung in den Nuten zur Folge hat.

Es wäre jedoch herstellungsbedingt von Vorteil, wenn der Zahn eines derartigen Stators keinen Zahnkopf, also keine Verbreiterung im Bereich des Luftspaltes im Vergleich zu seinem Schaft aufweist, weil dann relativ einfach vorgeformte oder vorgefertigte Spulen, also beispielsweise Zahnspulen in die Nut von der Statorbohrung eines Innenläufers aus eingebracht werden können. Damit würde eine bessere Kupferfüllung erreicht werden. Dies hat jedoch den Nachteil einer äußerst unzureichenden Flussführung über den Luftspalt zum Rotor hin zur Folge.

Diese Nachteile können durch Nutverschlüsse aus Kunststoff mit einer vorgebbaren Permabilität bisher jedoch nur unbefriedigt verbessert werden.

Eine weitere Möglichkeit eine ausreichende hohe Kupferfüllung zu erreichen, ist ein Aufbau eines Stators in zweigeteilter Form, d.h. er besteht aus einem Zahnpaket und einem Jochrücken, in den das bewickelte Zahnpaket nach dem Bewicklungs- und einen eventuellen Vergussvorgang eingesetzt wird.

Aus der DD 52 614 ist ein Verfahren zur Herstellung von magnetisch leitenden Nutenverschlusskeilen für Wicklungsnuten elektrischer Maschinen bekannt, wobei die Nutverschlusskeile aus mit Kunststoffen vergossen pulverförmigen Eisen bestehen.

Ausgehend davon liegt der Erfindung die Aufgabe zugrunde, die offenen Nuten einer dynamoelektrischen Maschine derart zu gestalten, dass die oben genannten Nachteile vermieden werden, d.h. dass die Flussführung zum Rotor wie bei einer geschlossenen Nut ausgeführt ist und gleichzeitig eine hohe Kupferfüllung der Nuten vorliegt.

Die Lösung der gestellten Aufgabe gelingt durch eine dynamoelektrische Maschine mit einem Stator mit zu einem Rotor ausgerichteten Zähnen, wobei zumindest eine vorgebbare Anzahl von Zähnen von einem in Nuten angeordneten Wicklungssystem umgeben ist, wobei die durch die Zähne gebildeten Nuten offen ausgeführt sind und durch einen Nutverschlusselement jeweils geschlossen sind, das ein elektrisch und magnetisch nichtleitfähiges Material aufweist, in dem im Bereich der zum Luftspalt gewandten Zahnabschnitte der Zahnköpfe Zahnkopfverbreiterungselemente vorgesehen sind.

Die Lösung der gestellten Aufgabe gelingt auch durch ein Verfahren zur Herstellung von Nutverschlüssen und ein Verfahren zur Herstellung eines Stators.

Die Nut wird nunmehr jeweils mit einem erfindungsgemäßen Nutverschlusselement verschlossen, das die Zahnkopfverbreitungselemente enthält. Der Nutverschluss ist hauptsächlich aus einem elektrischen magnetisch nicht leitfähigen Material, vorzugsweise aus Kunststoff aufgebaut. In diesen Kunststoff sind nunmehr die Zahnkopfverbreiterungselemente integriert. Diese Zahnkopfverbreiterungselemente sind vorzugsweise weichmagnetische Materialien, beispielsweise in geblechter Form oder litzenförmig oder eine Form mit magnetisch leitfähigen Partikeln, die nunmehr mit dem Kunststoff verbunden sind.

Die Verbindung mit Kunststoff kann beispielsweise durch einen Formschluss erfolgen, in dem Zahnkopfverbreiterungselemente in ein Kunststoffwerkzeug eingelegt und dort umspritzt werden. Die dadurch erhaltenen Nutverschlüsse, die nunmehr aus einer Kunststoffmasse und den Zahnkopfverbreiterungselementen bestehen, werden in die offenen Nuten eingesetzt.

Das Einsetzen geschieht beispielsweise über Schnappverbindungen oder durch axiales Einschieben in die Nut. Dies presst die Leiter der Wicklung zusätzlich zusammen, so dass sich dadurch auch der Kupferfüllfaktor der Nut erhöht.

Die geblechten Zahnkopfverbreiterungselemente werden durch Stanzpaketieren hergestellt oder durch Backlackverbindungen der Einzelbleche gebildet.

Die Zahnkopfverbreiterungselemente sind somit aus axial hintereinander angeordneten Einzelblechen oder aus weichmagnetischen Litzen aufgebaut, die vorzugsweise isolierte Filamente aufweisen. Strangförmigen Nutverschlüsse sind nun durch ein Spritzgußverfahren mit eingelegten Zahnverbreiterungselementen oder durch einen Extrusionsprozess herstellbar.

Der Extrusionsprozess eignet sich insbesondere für die Litzenförmig aufgebauten Zahnkopfverbreiterungselemente, da sowohl die Litze als auch der Kunststoff in einem Arbeitsgang hergestellt werden können.

Durch die erfindungsgemäßen Nutverschlüsse wird nunmehr im Bereich der Nutöffnung die Flussführung positiv beeinflusst, d.h. die abrupten Übergänge zwischen den Bereichen des Luftspaltes Zahn und offene Nut wird durch die Zahnkopfverbreiterungselemente vergleichmäßigt. Es liegt somit, magnetisch betrachtet auch keine kompletten geschlossenen Nutverschlüsse vor, die zu Streueffekten führen könnten.

Die Erfindung sowie weitere vorteilhafte Ausgestaltungen der Erfindung sind den prinzipiellen Zeichnungen zu entnehmen. Darin zeigen:
- FIG 1: ein Statorblechpaket mit Zahnspulenwicklungen,
- FIG 2: ein Detailausschnitt,
- FIG 3 bis 5: Zahnkopfverbreiterungselemente,
- FIG 6: eine Detaildarstellung.

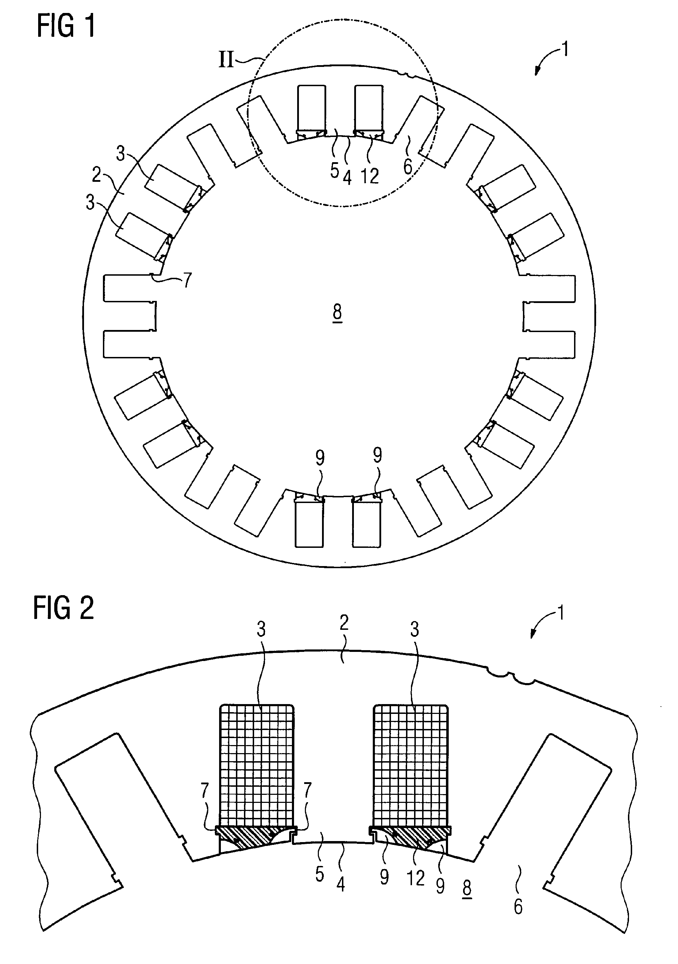

FIG 1 zeigt ein Blech 2 eines Stators 1 mit verschiedenen Zahnformen, wobei ein Zahn mit einem Zahnschaft 5 und einem ebenso breiten Zahnkopf 4 jeweils von einer Zahnspule 3 umgeben ist. Der Zahnschaft 5 ist dabei durch parallele Nutwände gebildet. Somit ist nur jeder zweite Zahn von einer Zahnspule 3 umgeben, wobei sich die Zahnspule 3 in Nuten 6 befindet, die parallele Nutwände aufweist. Der sich in Richtung Luftspalt der dynamoelektrischen Maschine verjüngende Zahn ist dabei nicht von Zahnspulen 3 umgeben. Der in einigen Nuten 6 prinzipiell dargestellte Nutverschluss setzt sich nunmehr aus einem elektrisch und magnetisch nicht leitfähigen Material, insbesondere Kunststoff 12 und in den Kunststoff 12 eingefügten Zahnkopfverbreiterungselementen 9 zusammen.

Die Zahnkopfverbreiterungselemente 9 sind dabei über Formschlusselemente 10 im Kunststoff 12 und/oder durch Nasen 11 in Ausnehmungen 7 des Zahnschaftes 5 des bewickelten oder des unbewickelten Zahnes positioniert, wie dies in einer Detaildarstellung gemäß FIG 2 gezeigt ist.

In der oben beschriebenen Ausführungsform ist nur jeder zweite Zahn von einer Zahnspule 3 umgeben, d.h. in einer Nut 6 befindet sich nur eine Spulenseite einer Zahnspule 3. Die Erfindung ist aber auch auf andere Wicklungssysteme, beispielsweise klassisch gesehnte Wicklungen anwendbar, wobei aufgrund der offenen Nuten 6 der Wickelvorgang wesentlich erleichtert wird.

Durch den erfindungsgemäßen, oben beschriebenen Nutverschluss werden grundsätzlich äußerst vorteilhafte elektromagnetische Bedingungen geschaffen, die eine vergleichsweise erhöhte Drehmomentabgabe der dynamoelektrischen Maschine bewirken.

Die Zahnkopfverbreiterungselemente 9 sind derart in den Kunststoff 12 eingebettet, dass sich in Richtung Luftspalt der dynamoelektrischen Maschine ein gleichmäßiger Statorbohrungsradius einstellt. Die Statorbohrung ist also im Wesentlichen rund ausgeführt, so dass auch im Bereich der Nutschlitze keine Stufung auftritt. Dies vergleichmäßigt den Verlauf der magnetischen Flussdichte im Luftspalt der dynamoelektrischen Maschine, so dass sich die Nutrastmomente weiter verringern.

Insbesondere bei einem Blechschnitt gemäß FIG 1, bei dem jeder zweite Zahn von einer Zahnspule 3 umgeben ist, und die diesen Zahn umgebenden Nuten 6, radial betrachtet parallel ausgerichtet sind, sind die Zahnkopfverbreiterungselemente 9 einer Nut 6 unterschiedlich ausgebildet, um sich dem runden Verlauf der Statorbohrung anzupassen.

Durch die Zahnkopfverbreiterungselemente 9 verbessert sich die Flussführung im Bereich des Zahnkopfes 4. Die Streuverluste werden aufgrund des Kunststoffes 12 zwischen den Zähnen bzw. zwischen den Zahnkopfverbreiterungselementen 9 erheblich reduziert. Des Weiteren vereinfacht sich die Montage, insbesondere der Zahnspulen auf ihre jeweiligen Zähne aus Richtung Statorbohrung.

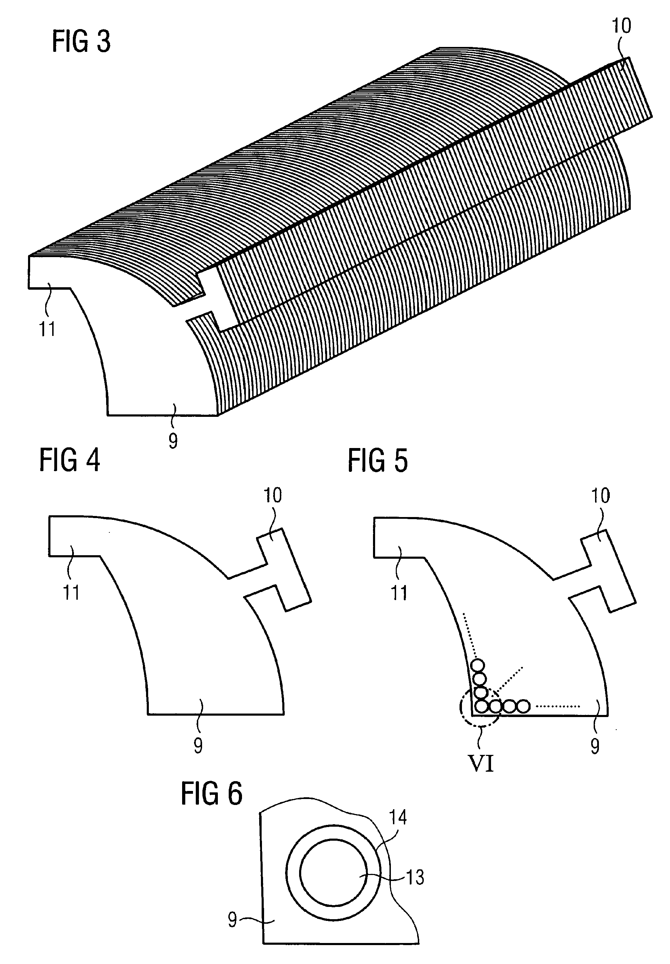

In FIG 3 ist prinzipiell ein Zahnkopfverbreiterungselement 9 dargestellt, mit einer axialen Ausdehnung, die vorteilhafterweise einer Nutlänge entspricht, also ungefähr der axialen Länge des Stators 1. Das Zahnkopfverbreiterungselement 9 kann auch mittels einzelner axialer Teilstücke auf die axiale Länge der Nut 6 zusammengesetzt werden.

Das Zahnkopfverbreiterungselement 9 weist grundsätzlich Mittel auf, um im Kunststoff 12 und/oder Zahnschaft 5 positioniert und/oder fixiert zu werden. Vorteilhaft sind dabei Formschlusselemente 10 und/oder Nasen 11 vorgesehen, mit dem das Zahnkopfverbreiterungselement 9 im Blech 2 des Blechpakets des Stators 1, also dem Zahnschaft 5 und/oder im Kunststoff 12 des Nutverschlusses positioniert wird.

Prinzipiell dargestellt ist außerdem, dass das Zahnverbreiterungselement 9 nach FIG 3 geblecht ausgeführt ist, dies geschieht unter anderem durch Stanzpaketieren. Dabei werden die Einzelbleche im Stanzwerkzeug mittels Stanznoppen verbunden. Alternativ dazu werden die Einzelbleche durch Backlack zusammen gefügt, wobei die mit Backlack beschichteten Einzelbleche unter axialem Druck bei einem vorgegebenen Temperatureinfluss verklebt werden. Die Blechung der Zahnkopfverbreitungselemente 9 reduziert auch in den Zahnkopfverbreitungselemente 9 die Wirbelstromverluste.

Die Zahnkopfverbreiterungselemente 9 werden durch ein Spritzgussverfahren oder durch ein Extrusionsverfahren Teil des Nutverschluss. Die Zahnkopfverbreiterungselemente 9 sind dabei entweder geblecht ausgeführt oder durch gepresste Litzen gebildet, die die magnetisch leitfähigen Filamenten mit jeweils einer Isolation 14 gemäß FIG 5, 6 umgeben. Auch dadurch werden die Wirbelstromverluste im Zahnkopfverbreiterungselemente 9 reduziert.

In einer weiteren Ausgestaltung sind die Zahnkopfverbreiterungselemente 9 aus magnetisch leitfähigen Partikeln aufgebaut, deren Größe, abhängig von der Maschinengröße sich von einigen mm bis in den Nanobereich erstreckt. Diese Partikel werden vorzugsweise in einem Trägermaterial, wie z.B. Kunststoff verbacken.

Nach Einsetzen der Wicklung 3 in das Blechpaket des Stators 1 werden nunmehr die Nutverschlusselemente, die aus Zahnkopfverbreiterungselementen 9 und einem Kunststoff 12 bestehen, eingesetzt, so dass sich eine vorteilhafte Flussführung im Bereich des Luftspaltes 8 einer nicht näher dargestellten dynamoelektrischen Maschine ergeben. Dabei bleibt nunmehr im Betrieb der dynamoelektrischen Maschine der Rotor vergleichsweise kühler, so dass diese Maschine aufgrund des nunmehr höheren Stromes in den Zahnspulen 3 vergleichsweise ein höheres Drehmoment abgeben kann.

Die erfindungsgemäße Ausgestaltung der Nutschlitze durch die im Kunststoff 12 positionierten Zahnkopfverbreiterungselemente 9 lässt sich nicht nur bei einem Blechschnitt gemäß dem Ausführungsbeispiel nach FIG 1 einsetzen, sondern auch bei einem Blechschnitt mit identisch aufgebauten Zähnen, wenn die Nuten 6 radial angeordnet sind. Dabei sind dann die Zahnkopfverbreiterungselemente 9 identisch auszuführen.

Des Weiteren lässt sich der erfindungsgemäße Gedanke auch bei dynamoelektrischen Maschinen verwirklichen, bei denen sich pro Nut 6 zwei Spulenseiten einer Zahnspule befinden, d.h. indem jeder Zahn von einer Zahnspule umgeben ist.

Die Form der Zahnkopfverbreiterungselemente 9 ist vorteilhafterweise so wie in den Figuren ausgeführt, d.h. es liegt in Richtung Mitte des Nutschlitzes eine Verjüngung der radialen Ausdehnung vor. Damit werden magnetische Sättigungseffekte der Zahnkopfverbreiterungselemente 9 vermieden.

Selbstverständlich sind auch andere Formgebungen der Zahnkopfverbreiterungselemente 9 denkbar, die ebenfalls eine Fixierung im Nutschlitz bei gleichzeitiger Vermeidung von Sättigungseffekten gewährleisten.

Der Kunststoff 12 kann ergänzend zu den oben beschriebenen Ausgestaltungen der Zahnkopfverbreiterungselemente 9 auch mit magnetisch leitfähigen Partikeln versehen sein. Die Dichte sollte aber geringer sein, als die der Zahnkopfverbreiterungselemente 9, da sonst magnetische Eigenschaften wie bei einer geschlossenen Nut vorliegen würden.

## Patentansprüche

1. Dynamoelektrische Maschine mit einem Stator (1) mit zu einem Rotor ausgerichteten Zähnen, wobei zumindest eine vorgebbare Anzahl von Zähnen von einem in Nuten (6) angeordneten Wicklungssystem umgeben ist, wobei die durch die Zähne gebildeten Nuten (6) offen ausgeführt sind und durch einen Nutverschlusselement jeweils geschlossen sind, das ein elektrisch und magnetisch nichtleitfähiges Material aufweist, in dem im Bereich der zum Luftspalt (8) gewandten Zahnabschnitte der Zahnköpfe (4) Zahnkopfverbreiterungselemente (9) vorgesehen sind.

2. Dynamoelektrische Maschine nach Anspruch 1, **dadurch gekennzeichnet , dass** die Zahnkopfverbreiterungselemente (9) aus magnetisch, insbesondere weichmagnetischem Material bestehen.

3. Dynamoelektrische Maschine nach Anspruch 1 oder 2, **dadurch gekennzeichnet , dass** die Zahnkopfverbreiterungselemente (9) geblecht oder gesintert oder als Litzen aus isolierten Filamenten (13) ausgeführt sind.

4. Dynamoelektrische Maschine nach einem der vorhergehenden Ansprüche, **dadurch gekennzeichnet , dass** die Zahnkopfverbreiterungselemente (9) im Nutschlitz mit elektrisch und magnetisch nicht leitfähigem Material, insbesondere durch Formschluss verbunden sind.

5. Dynamoelektrische Maschine nach einem der vorhergehenden Ansprüche, **dadurch gekennzeichnet, dass** die Zahnkopfverbreiterungselemente (9) durch einen Extrusionsprozess von Kunststoff (12) und Litze herstellbar sind.

6. Dynamoelektrische Maschine nach einem der vorhergehenden Ansprüche 1 bis 4, **dadurch gekennzeichnet, dass** die Zahnkopfverbreiterungselemente (9) in einem Spritzgussverfahren herstellbar sind.

7. Verfahren zur Herstellung von Nutverschlüssen, durch folgende Schritte:
- Herstellen von Zahnkopfverbreiterungselementen (9),
- Positionieren der Zahnkopfverbreiterungselemente (9) in Kunststoff (12).

8. Verfahren zur Herstellung eines Stators (1) einer dynamoelektrischen Maschine durch folgende Schritte:
- Stanzpaketieren eines der Bleche des Stators (1),
- Einsetzen eines Wicklungssystems in Nuten (6) des Stators (1),
- Einsetzen von Nutverschlusselementen, die in Kunststoff eingebettete Zahnkopfverbreiterungselemente (9)aufweisen.
